# EUROPÄISCHE PATENTSCHRIFT

(11) **EP 1 483 955 B1**
(45) Veröffentlichungstag und Bekanntmachung des Hinweises auf die Patenterteilung: **26.03.2008**
(21) Anmeldenummer: 04020582.5
(22) Anmeldetag: 19.07.2000
(51) Int. Cl.: A01D 45/02

(54) **Erntegerät**
Harvester
Appareil à récolter

(30) Priorität: 19.07.1999 DE 19933777; 19.07.1999 DE 19933779; 19.07.1999 DE 19933778; 19.07.1999 DE 19933780; 30.09.1999 DE 19947288; 26.10.1999 DE 19951636; 26.10.1999 DE 19951459; 01.11.1999 DE 19952566
(43) Veröffentlichungstag der Anmeldung: 08.12.2004
(62) Teilanmeldung aus: 00956208.3
(73) Patentinhaber: Maschinenfabrik Bernard Krone GmbH, 48480 Spelle (DE)
(72) Erfinder: Krone, Bernard, 48480 Spelle (DE); Ahler, Wilhelm, 48703 Stadtlohn (DE)
(74) Vertreter: Pott, Ulrich

(56) Entgegenhaltungen:
- EP-A- 0 378 277
- EP-A- 0 508 189
- EP-A- 0 760 200
- DE-A1- 3 324 898
- US-A- 3 439 479

## Beschreibung

Die Erfindung bezieht sich auf ein Erntegerät zum Ernten von Mais oder dergleichen stengelartigem Erntegut nach dem Oberbegriff des Anspruchs 1.

Aus der DE 33 24 898 C2 ist ein Erntegerät bekannt, das zur Abtrennung der Halme des Ernteguts in eine Laschenkette eingehängte Schneidwerkzeuge aufweist, wobei die Laschenkette weiterhin mit eingehängten Haltemitteln zur Beförderung der abgetrennten Halme versehen ist. Diese werden der Eintrittsöffnung eines Häckslers oder dergleichen zugeführt. Hierfür ist zwischen zwei spiegelbildlich angeordneten Endlosketten ein Zuführbereich vorgesehen, in dem auch eine Umlenkung der Ketten stattfindet. Im Bereich dieser Umlenkung werden die aufgenommenen Halme zusammengeführt, wodurch sich ein erheblicher Erntegutanfall in diesem Bereich einstellt. Entsprechend ist hier die Gefahr gegeben, daß das Erntegut nicht vollständig durch den Häcksler oder dergleichen abgeführt wird, sondern sich vor dessen Eintrittsöffnung aufbaut. Des weiteren bleibt während des gesamten Umlaufs des Förderers Erntegut an Mitnehmern der Kette hängen, insbesondere Blätter und dergleichen langfaserige Anteile, wodurch die Gefahr besteht, daß die Transportfunktion der Mitnehmer sich während der Dauer des Einsatzes verschlechtert.

Der Erfindung liegt das Problem zugrunde, die Gefahr des Zusetzens eines Förderers zu verringern.

Die Erfindung löst dieses Problem durch ein Erntegerät mit den Merkmalen des Anspruchs 1. Weitere vorteilhafte Ausgestaltungen sind in den Ansprüchen 2 bis 5 angegeben.

Die Abstreifer nach der Erfindung ermöglichen eine Räumung der Kettenglieder, wobei ein Verstopfen der Räume zwischen den Abstreifern und der Eintrittsöffnung des Häckslers oder dergleichen Weiterverarbeitungseinrichtung durch Öffnungen vermieden ist, die zwischen den Räumelementen, die der Kette zugewandt sind, und den dazu beabstandeten Halterungen der Abstreifer angeordnet sind. Insbesondere bei im wesentlichen parallel zur Fahrtrichtung stehenden Abstreifern, bei denen die Öffnungen seitliche Durchtritte bilden, ist sichergestellt, daß im Stauraum vor der Eintrittsöffnung eines rückwärtig an die Endlosförderer anschließenden Häckslers ein seitliches Abführen von nicht mehr aufnehmbaren Pflanzen- und/oder Bodenresten, die sich ansonsten verstopfend vor der Eintrittsöffnung aufbauen würden, sichergestellt ist.

Weitere Vorteile und Einzelheiten ergeben sich aus nachfolgend beschriebenen und in der Zeichnung dargestellten Ausführungsbeispielen des Gegenstandes der Erfindung.

In der Zeichnung zeigt:

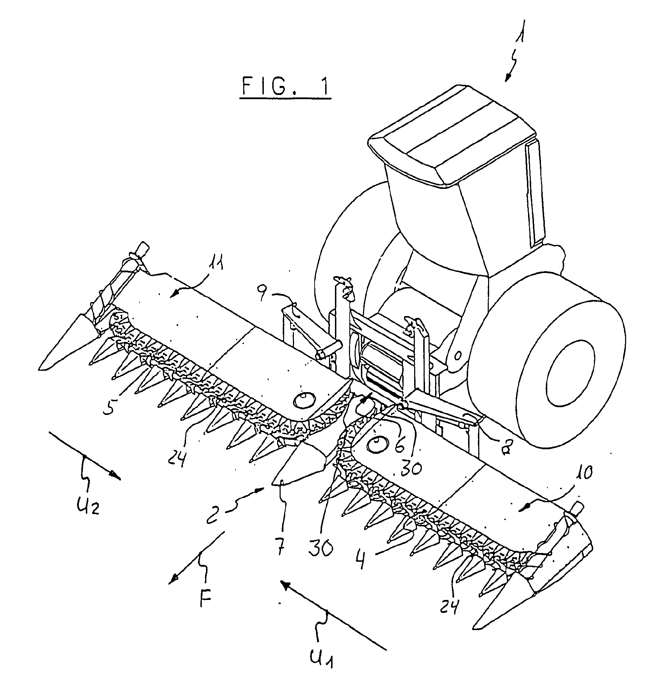

- Fig. 1: eine perspektivische Ansicht eines Ausführungsbeispiels des erfindungsgemäßen Erntegeräts mit zwei in einem Vorsatzgerät gegeneinander umlaufenden und spiegelbildlich ausgebildeten Endlosförderern,
- Fig. 2: eine perspektivische Ansicht des Vorsatzgeräts,
- Fig. 3: eine Ausschnittsvergrößerung des Bereichs III in Fig. 2,
- Fig. 4: eine Ausschnittsvergrößerung des Bereiches IV in Fig. 3,
- Fig. 5: eine Explosionsdarstellung der in Fig. 4 gezeigten Teile,
- Fig. 6: einen Schnitt entlang der Linie VI-VI in Fig. 4,
- Fig. 7: eine Explosionsdarstellung von einzelnen, leicht abweichend ausgebildeten Kettengliedern, und
- Fig. 8: eine Schnittdarstellung etwa entlang der Linie VIII-VIII in Fig. 7.

Das Erntegerät 1 gemäß dem Ausführungsbeispiel ist als Selbstfahrer ausgebildet und umfaßt ein Vorsatzgerät 2, das das Erntegut 3 mittels zweier als Gliederketten ausgebildeten Endlosförderer 4,5 abschneidet und aufnimmt und einer im mittleren Bereich zwischen den Gliederketten 4,5 gelegenen Eintrittsöffnung 6 einer Weiterverarbeitungseinrichtung, hier eines Häckslers, zuführt.

An Stelle der Verwendung zweier nebeneinanderliegender Endlosförderer 4,5 wäre es auch möglich, ein Erntegerät 1 mit nur einem umlaufenden Endlosförderer 4 bzw. 5 zu betreiben, an dessen seitlichem Endbereich dann die Zuführung zur Eintrittsöffnung 6 des Häckslers läge.

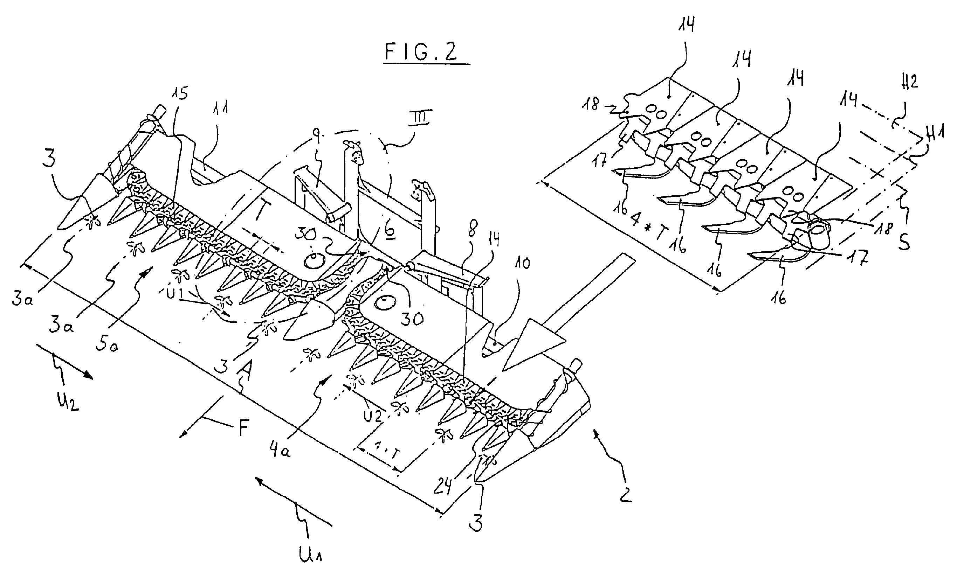

Die als Gliederketten 4,5 ausgebildeten Endlosförderer sind spiegelbildlich zueinander ausgebildet und laufen in Richtung der Pfeile U1 bzw. U2 mit ihrem Arbeitstrum 4a bzw. 5a (Fig. 2) auf eine vertikale Längsmittelebene des Erntegeräts 1 zu. Im Bereich dieser vertikalen Längsmittelebene befindet sich der Zuführungsbereich 30 zur Eintrittsöffnung 6 der Weiterverarbeitungseinrichtung.

Durch die quer zur Fahrtrichtung F angeordneten Arbeitstrumbereiche 4a,5a der Gliederketten 4,5 kann ein Erntegutstreifen mit einer Vielzahl von nebeneinanderangeordneten Pflanzenreihen 3a abgeerntet werden. Das Erntegerät 1 kann auch reihenunabhängig eingesetzt werden. In der Regel werden jedoch die Maisfelder in Reihen angebaut und auch geerntet, was die Vorteile mit sich bringt, daß Lenkautomaten für die Erntegeräte 1 eingesetzt werden können, die die Stellung der Reihen 3a ertasten und eine entsprechende Führung des Erntegeräts 1 vornehmen, zudem wird bei der Reihenerntung eine ruhigere Fahrweise erreicht, da eine Erdanhäufung im Bereich der Pflanzenreihen 3a vorzufinden ist, die bei schrägem Überfahren zu einer den Unebenheiten entsprechend schwankenden Fahrweise des Erntegeräts 1 führt. Aufgrund der Vertiefungen zwischen den Erntegutreihen 3a kommt es vor, daß bei einer schräg oder quer zu diesen verlaufenden Aberntung eine gleichbleibende Schnitthöhe nicht immer erreichbar ist. Es besteht die Gefahr, daß die Schneid- und Einzugseinrichtung in den Boden stößt und dadurch Erde und Schmutz aufnimmt und in das Gerät einzieht bzw. daß die Maispflanzen zu hoch abgeschnitten werden.

Bei der dargestellten Ausführung eines Erntegeräts 1 mit zwei Gliederketten 4,5 als Endlosförderern ist im mittleren Bereich eine Teilerspitze 7 vorgesehen, die den Zuführungsbereich 30 teilt und eine Abweisung von mittleren Erntegutreihen 3a hin zu den seitlichen Gliederketten 4 und 5 bewirkt. Die Gliederketten 4,5 erfüllen dabei einerseits die Funktion, die Halme 3 von den Wurzeln abzutrennen, und andererseits, diese zur Eintrittsöffnung 6 der Weiterverarbeitungseinrichtung zu befördern. Die Gliederketten 4 und 5 sind in Rahmen 10,11 gehalten, wobei diese insgesamt um in etwa parallel zur Fahrzeuglängsachse liegende Schwenkachsen mittels Tragrahmen 8,9 verschwenkbar sind. Hierdurch sind sie zwischen einer parallel und im wesentlichen horizontal nebeneinanderliegenden Betriebsstellung in eine im wesentlichen vertikale Transportstellung verschwenkbar, in der das Erntegerät 1 folglich eine verringerte Breite einnimmt. Bei einem Normabstand von etwa 75 cm zwischen den Erntegutreihen 3a können bei einer Gerätebreite von 7,5 m im Betriebszustand 10 Reihen geerntet werden. Es kann zusätzlich vorgesehen sein, daß in Transportstellung der Endlosförderer 4,5 eine Hydraulik oder dergleichen Antriebselemente eine Vertikalverschiebung der das Vorsatzgerät 2 tragenden Schwenkachsen bewirken, so daß die Gesamthöhe des Erntegeräts 1 in Transportstellung etwa zur Durchfahrt niedriger Brücken oder Toreinfahrten um einige 10 cm abgesenkt werden kann gegenüber der Stellung, in der ein Verschwenken der die Endlosförderer 4,5 haltenden Rahmen 10,11 stattfindet.

Es ist weiterhin möglich, daß die Förderrichtung der Endlosförderer 4,5 schräg zu den Erntegutreihen 3a verläuft, wobei mehrere Endlosförderer 4,5 zwischen sich einen schrägen Zuführungsbereich zu einer Eintrittsöffnung 6 eines Häckslers oder dergleichen ausbilden. Hierfür können auch mehr als zwei Endlosförderer 4,5 vorgesehen sein.

Die Gliederketten 4,5 sind aus Kettengliedern 14,15 gebildet, die jeweils als einheitliche Funktionseinheiten ausgebildet und in ihrem unteren Bereich mit Schneidmitteln 16 versehen sind. Dadurch ist eine Schneidebene S gebildet, in der die Halme des Ernteguts 3 abgetrennt werden. Die Schneidmittel 16 können hierfür beispielsweise winkelmesserartig ausgebildet sein und entweder im freien Schnitt die Halme abtrennen oder, wie im Ausführungsbeispiel, mit einer festen oder beweglichen Gegenschneide 29 zusammenwirken. Zur Führung der abgetrennten Halme während der Förderung sind federnd gelagerte Bügel 24 vor dem Arbeitstrum 4a bzw. 5a der Ketten 4,5 vorgesehen.

Oberhalb der Schneidmittelebene S liegt zumindest eine Haltemittel 17 umfassende Halteebene H1, wobei die Haltemittel 17 die Weiterbeförderung der abgetrennten Halme zu dem Zuführungsbereich 30 und von dort in die Eintrittsöffnung 6 bewirken. Eine bessere Halterung ergibt sich mit einer zweiten Halteebene H2, die von Haltemitteln 18 gebildet ist und die parallel zur ersten Halteebene H1 liegt.

Die Gliederketten 4 und 5, die im Ausführungsbeispiel jeweils zur Mitte hin fördern, also entgegengesetzte Förderrichtungen U1 und U2 haben, weisen entsprechend gegeneinander spiegelsymmetrische Kettenglieder 14 bzw. 15 auf. Die Schneidmittel 16 sind im Ausführungsbeispiel als hakenförmige Messer ausgebildet, wobei in der Innenkrümmung der Haken in Zusammenwirkung mit der Gegenschneide der Schnitt stattfindet. Auch die Haltemittel 17,18 sind schräggestellt, um dadurch einen seitlich entgegen der Umlaufrichtung U1 ,U2 geneigten Transport der abgetrennten Halme zu ermöglichen. Die Schneidmittel 16 können gegenüber den Kettengliedern 14 bzw. 15 als Verschleißstücke austauschbar sein und beispielsweise mit letzteren verschraubt oder mit Stiften befestigt sein. Die Schneidmittel 16 wirken mit der feststehenden und den Rahmen 10 bzw. 11 zugeordneten Gegenschneide 29 zusammen, wobei durch die Abwinklung der Schneidmittel 16 ein Einziehen der Halme in Richtung dieser Gegenschneide 29 gewährleistet ist. An Stelle einer festen Gegenschneide 29 kommen auch rotierende Schneidscheiben oder oszillatorisch bewegte Messer in Betracht, die entweder im freien Schnitt oder in Zusammenwirken mit den Schneidmitteln 16 arbeiten.

Die von den Endlosförderern 4,5 beförderten Halme sammeln sich im mittleren Zuführungsbereich 30 des Erntegeräts 1, in dem sie der Häckslereintrittsöffnung 6 zugeführt werden. Dadurch ist die Gefahr von Verstopfungen in diesem Bereich erhöht. Beispielsweise können sich untere, zum Erdboden herabhängende Blätter, die insbesondere im angefeuchteten Zustand ein sehr zähes Verhalten zeigen, um die Schneidmittel 16 wickeln und dadurch deren Effektivität herabsetzen.

Im Zuführungsbereich 30 ist deshalb eine zu den Schneidmitteln 16 parallel und dicht oberhalb von deren Bewegungsebene stehende Gegenschneide 31 angeordnet, die bei Umlauf der Endlosförderer 4 bzw. 5 von den Schneidmitteln 16 unterlaufen wird. Es kann eine Gegenschneide 31 für jeden Umlaufförderer 4,5 vorgesehen sein. Es kann auch eine gemeinsame Gegenschneide 31 für mehrere Umlaufförderer 4,5 angeordnet sein. Die Gegenschneide 31 ist im Ausführungsbeispiel gegenüber den die Endlosförderer 4,5 tragenden Rahmen 10,11 ortsfest.

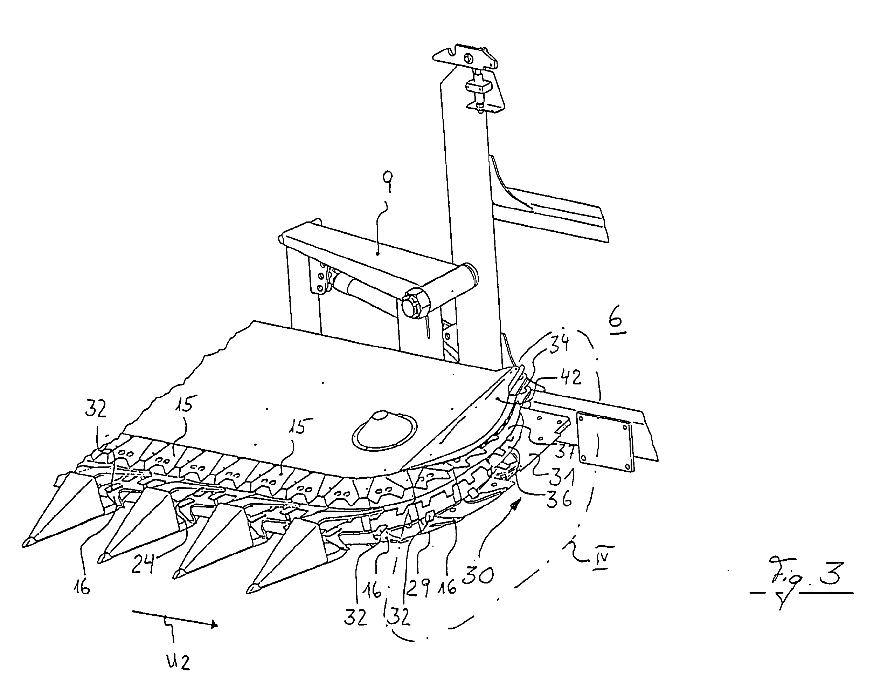

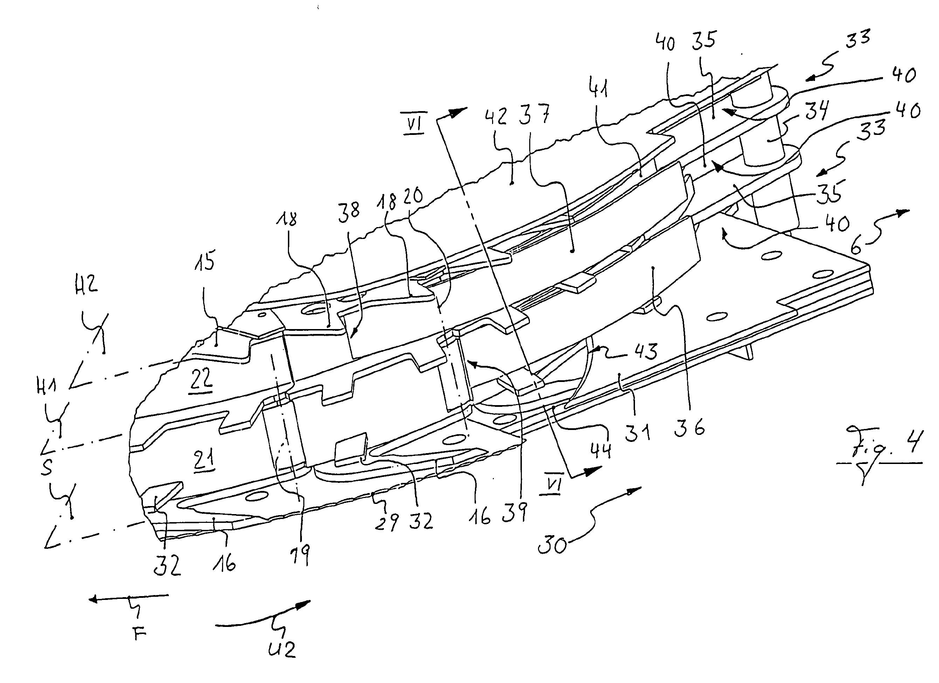

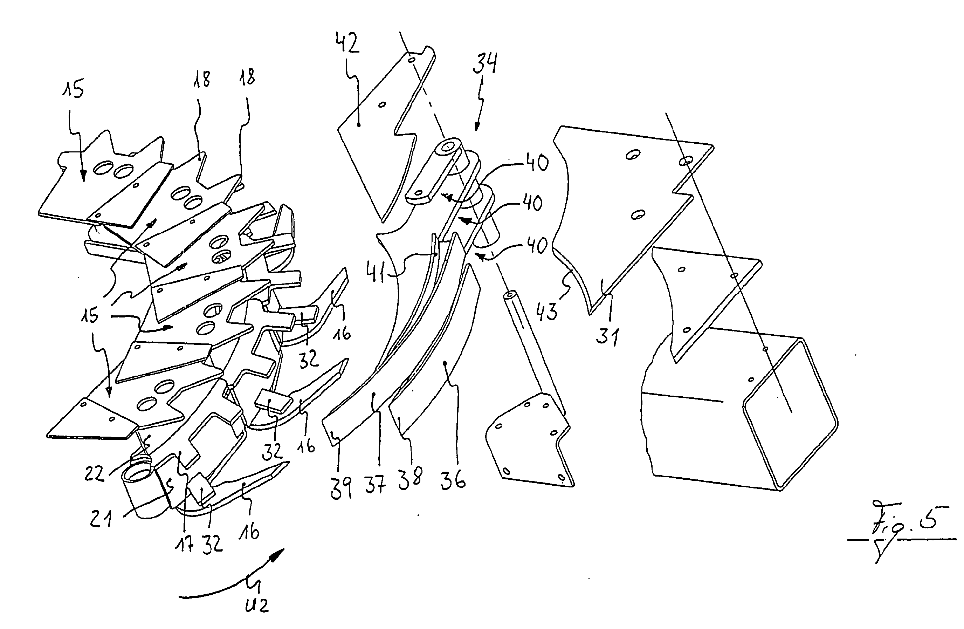

Zusätzlich zu der in Fig. 2 gezeigten Version der Kettenglieder 14,15 können diese gemäß Figuren 3 bis 6 für eine erhöhte Effektivität der Räumung der Schneidmittel 16 dicht oberhalb der Schneidmittelebene S stehende Mitnehmer 32 aufweisen, die ebenfalls wie die Haltemittel 17 und 18 und die Schneidmittel 16 auswärts weisen und die im Betrieb die Gegenschneide 31 in dichtem Abstand überlaufen. Dabei ist jedem Schneidmittel 16 im Ausführungsbeispiel genau ein Mitnehmer zugeordnet, der vertikal oberhalb des Schneidmittels angeordnet ist und der mit seiner in Umlaufrichtung U1 bzw. U2 vorderen Kante oberhalb des inneren Krümmungsbereiches des hakenförmigen Schneidmittels 16 steht.

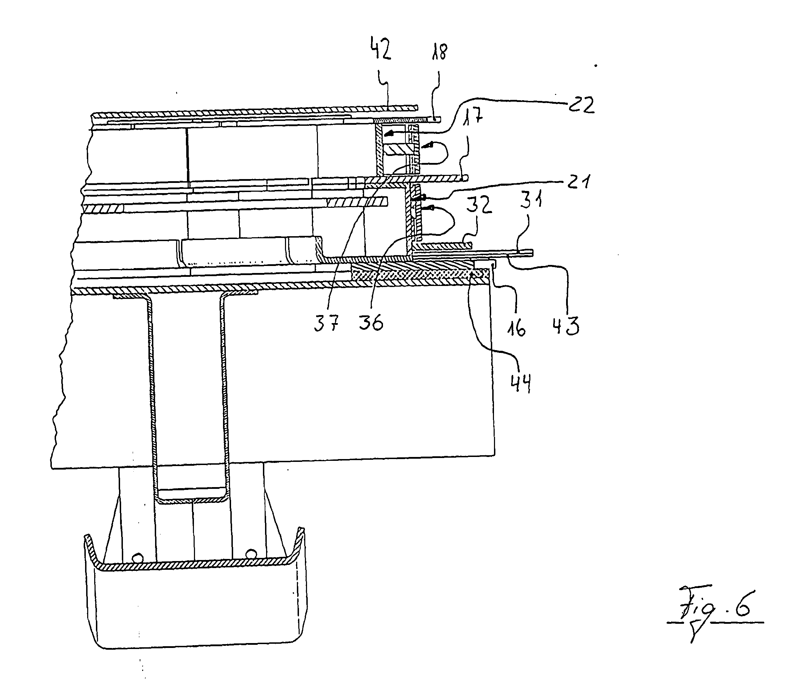

Der vertikale Abstand zwischen dem Mitnehmer 32 und der Gegenschneide 31 ist etwa gleich groß wie der zwischen der Gegenschneide 31 und dem Schneidmittel 16 (Fig. 6). Dieser Abstand liegt etwa im Bereich von 0,5 bis 3 mm. Besonders vorteilhaft, um einerseits ein Zwischensetzen von Erntegut in die Abstände zu verhindern und andererseits Fertigungstoleranzen noch ausgleichen zu können, ist ein Abstand von etwa 2 mm.

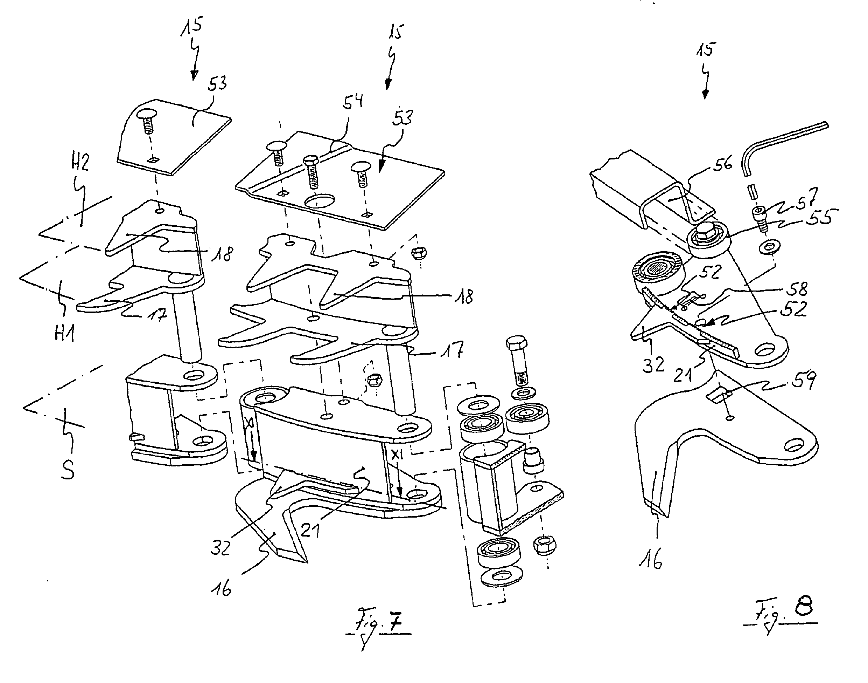

Wie in Fig. 7 sichtbar ist, ist in einer besonders günstigen Ausführung der oberen Mitnehmer 32 derart ausgebildet, daß er rückseitige Vorsprünge 52 aufweist, die in entsprechende Ausnehmungen des als Stahlplatte ausgebildeten Abweiseschilds 21 eingreifen und rückseitig mit diesem verschweißt sind. Dadurch ist auf der Vorderseite des Abweiseschilds 21 lediglich der als Plattenkörper vorstehende Mitnehmer 32 mit rechtwinkligen Kanten zu dem Abweiseschild 21 angeordnet, ohne daß der Kantenbereich durch Schweißnähte verbreitert ist.

Wie in Fig. 7 weiterhin sichtbar ist, ist in der ersten Halteebene H1 eine Abrundung der Haltemittel 17 vorgenommen, so daß dieses keine exakten Parallelogrammkörper mehr sind. Die Deckplatte 53, die die Kettenglieder 14,15 nach oben hin abdeckt, ist für jedes Kettenglied 14,15 einstückig und weist eine Abkröpfungskante 54 auf, so daß sich die Abdeckplatten im Umlenkungsbereich übereinanderschieben können.

Die einzelnen Kettenglieder sind über Lager 55 in einer Führungsschiene 56 parallel zu Ihrer Umlaufrichtung U1,U2 gehalten, so daß zwischen den Kettengliedern 14,15 und der Führungsschiene 56 lediglich eine Rollreibung besteht.

Weiter ist in Fig. 8 sichtbar, daß das Schneidmittel 16, das aus Verschleißgründen leicht auswechselbar sein sollte, nur mit einer einzigen Zentralschraube 57 gehalten ist, eine darüberhinausgehende Lagesicherung findet durch eine ausgebogene Lasche 58 statt, die in eine Ausnehmung 59 des Schneidmittels 16 eingreift.

Die Schneidkante 43 der Gegenschneide 31 ist derart gekrümmt, daß sie in Richtung der Umlaufbahn der Gliederketten 4 bzw. 5 ausgenommen ist und daher eine Führung in Richtung der Kette bildet, wobei diese Führung mit der Führung durch die hakenförmigen Schneidmittel 16 zusammenwirkt. In dem Zwischenraum zwischen der Gegenschneide 31 und den Schneidmitteln 16 liegendes Material kann daher nicht seitlich entweichen, sondern wird an der Schneidkante 43 der Gegenschneide 31 geschnitten.

Ein Umwickeln von etwa Blattanteilen im Erntegut um die Schneidmittel 16 wird durch die darüberliegenden Mitnehmer 32 weitgehend verhindert, Anteile, die sich vor die Schneidmittel 16 und die Mitnehmer 32 gelegt haben, werden in jedem Fall durch die dazwischengreifende Gegenschneide 31 zerkleinert.

Im Zuführungsbereich 30 sind Abstreifer 33 angeordnet, um die Gliederketten 4 bzw. 5 von Erntegut zu räumen und dieses der Eintrittsöffnung 6 zuzuführen. Die Abstreifer 33 weisen eine in Fahrtrichtung F rückwärtige Halterung 34 auf, von der aus sich Tragmittel 35, etwa im wesentlichen horizontal verlaufende Bleche, in Fahrtrichtung erstrecken und auf ihrem der Halterung 34 abgewandten Ende die den Kettengliedern 14 bzw. 15 zugeordneten Räumelemente 36,37 tragen. Die Räumelemente 36,37 stehen hochkant, sind an die Umlenkung der Gliederketten 4,5 im Zuführungsbereich 30 angepaßt und erstrecken sich jeweils zwischen zwei Ebenen H1,H2 der Haltemittel 17,18 bzw. zwischen der Ebene der Mitnehmer 32 und der ersten Halteebene H1. Die Kettenglieder 14,15 weisen zur besseren Zusammenwirkung mit den Räumelementen 36,37 der Abstreifer 33 geschlossene Vorderflächen 21,22 nach Art von Abweiseschilden auf. Alternativ ist auch denkbar, daß offene Zwischenräume zwischen benachbarten Gelenkachsen 19 und 20 der Kettenglieder 14 bzw. 15 von Zähnen eines Umlenkrades von hinten im Bereich der Umlenkung geschlossen werden.

Die geschlossene Vorderfläche 21,22 dient jedoch als Abweiseschild, der verhindert, daß Erntegut in den Innenbereich der Kette eindringt, und ist insofern besonders vorteilhaft. Zwischen der Halterung 34 der Abstreifer 33 und dem Räumelement 36 bzw. 37 befinden sich seitliche Öffnungen 40, durch die hindurch bei zu hohem Anfall von Pflanzenresten vor der Eintrittsöffnung 6 die aufgestauten Pflanzenreste seitlich entweichen können.

Bei einem Erntegerät 1 mit zwei Endlosförderern 4,5 sind die Verhältnisse spiegelsymmetrisch, so daß links und rechts der Eintrittsöffnung 6 Abstreifer 33 angeordnet sind, die sich von ihren Halterungen 34 jeweils in Fahrtrichtung F spiegelsymmetrisch und annähernd parallel zu einer vertikalen Fahrzeuglängsmittelebene erstrecken, so daß auch die Öffnungen 40 etwa parallel zur Fahrzeuglängsmittelebene liegen.

Die Abstreifer 33 können schwenkbar an den Halterungen 34 angeordnet sein, so daß erstere etwa zu Reinigungs- oder Wartungszwecken von den Kettengliedern 14,15 weg verschwenkt werden können. Ein Bewegen in die Funktionsstellung, in der die vorderen Endbereiche 38,39 der Räumelemente 36,37 dicht beabstandet (0,5 mm bis 4 mm) vor den Vorderflächen 21,22 der Kettenglieder 14,15 gehalten sind, kann dann durch Federbeaufschlagung und Verwendung von - ggf. einstellbaren - Anschlägen zur Sicherung des Mindestabstandes erreicht werden. Alternativ kann die Halterung 34 der Abstreifer 33 auch fest ausgeführt sein.

Gemäß dem Ausführungsbeispiel ist hinter dem Räumelement 36 ein zweites Räumelement 41 angeordnet, das von den oberen Haltemitteln 18 mitgeführte Erntegutreste aufnehmen und durch die Öffnungen 40 nach außen führen kann. Dieses zweite Räumelement 41 ist enger an die Umlenkungsbahn der Kettenglieder 14,15 angelegt als das vordere Räumelement 36 bzw. 37, das mit seinem rückwärtigen Ende eine Führungsfunktion des Ernteguts 3 in Richtung der Eintrittsöffnung 6 ausbildet.

Zwischen den Räumelementen 36 und 37 bzw. zwischen dem unteren Räumelement 36 und der Gegenschneide 31 laufen die Haltemittel 17 bzw. die Mitnehmer 32 derart, daß sie im engen Abstand mit den Räumelementen zusammenwirken und letztere das Erntegut abstreifen. Gleiches gilt für die Haltemittel 18, die im oberen Bereich zwischen einer Abdeckplatte 42 und dem Räumelement 37 einlaufen.

## Patentansprüche

1. Erntegerät (1) zum Ernten von Mais oder dergleichen stengelartigem Erntegut (3), wobei das Erntegerät (1) zumindest einen umlaufenden Endlosförderer (4;5) für aufgenommenes Erntegut (3) umfaßt, der endseitig einen Zuführungsbereich (30) des Ernteguts (3) zu einer Eintrittsöffnung (6) einer Weiterverarbeitungseinrichtung, insbesondere eines Häckslers, ausbildet, wobei der Endlosförderer (4;5) zumindest eine untere, auswärts weisende Schneidmittel (16) umfassende Schneidebene (S) und zumindest eine darüberliegende, auswärts weisende Haltemittel (17;18) umfassende Halteebene (H1;H2) für die Ernteguthalme aufweist und wobei der oder die Endlosförderer (4;5) als Gliederkette(n) ausgebildet ist oder sind und im Zuführungsbereich (30) eine Umlenkung erfahren, **gekennzeichnet durch** zumindest einen dem Zuführungsbereich (30) der Eintrittsöffnung (6) zugeordneten und gegenüber dieser im Betrieb ortsfest gehaltenen Abstreifer (33), der mit seinem der Halterung abgewandten Bereich jeweils in den Umlenkbereich der Gliederkette(n) (4;5) hineinragt und dort ein Räumelement (36;37) zum Auswerfen des Ernteguts und zur Säuberung der Gliederkette(n) (4;5) umfaßt, wobei zwischen dem Räumelement (36;37) und der ortsfesten Halterung (34) zumindest eine Öffnung (40) vorgesehen ist.

2. Erntegerät nach Anspruch 1, **dadurch gekennzeichnet, daß** sich die Abstreifer (33) von ihrer Halterung (34) im wesentlichen in Fahrtrichtung (F) parallel zu einer vertikalen Fahrzeuglängsmitttelebene erstrecken und die Öffnungen (40) seitliche Durchtritte bilden.

3. Erntegerät nach Anspruch 2, **dadurch gekennzeichnet, daß** die Räumelemente (36;37) als hochkant stehende Flachkörper ausgebildet sind, die in ihrem rückwärtigen Bereich über hierzu senkrecht angeordnete Tragmittel (35) mit den Halterungen (34) verbunden sind.

4. Erntegerät nach Anspruch 3, **dadurch gekennzeichnet, daß** die Lagerung (34) der Abstreifer (33) schwenkbar und federbeaufschlagt ist.

5. Erntegerät nach einem der Ansprüche 1 bis 4, **dadurch gekennzeichnet, daß** zumindest hinter einem der Räumelemente (36) ein zweites Räumelement (41) angeordnet ist, das im wesentlichen der von den Kettengliedern im Umlenkbereich beschriebenen Umlenkung folgt.

## Claims

1. Harvester (1) for harvesting maize or the like stalked harvested crops (3), the harvester (1) comprising at least one circulating continuous feeder (4, 5) for harvested crop (3) which is picked up, which continuous feeder (4, 5) forms, at an end, an infeed region (30) for the infeed of the harvested crop (3) to an inlet opening (6) of a means of further processing and in particular a chopper, the continuous feeder (4, 5) having at least one lower, cutting, plane (S) comprising outward-pointing cutting means (16) and, situated thereabove, at least one holding plane (H1, H2) for the stalks of the harvested crop which comprises outward-pointing holding means (17, 18), and the continuous feeder or feeders (4, 5) taking the form of a link chain or chains and undergoing a change of direction in the infeed region (30), **characterised by** at least one wiper (33) which is associated with the infeed region (30) of the inlet opening (6) and which is held in a fixed position relative thereto in operation and whose region remote from the mounting by which it is held projects into the region in which the link chain(s) (4, 5) changes/change direction and comprises at that point a clearing-off element (36, 37) to eject the harvested crop and to clean the link chain(s) (4, 5), at least one opening (40) being provided between the clearing-off element (36, 37) and the fixed mounting (34).

2. Harvester according to claim 1, **characterised in that** the wipers (33) extend from their mounting (34), substantially in the direction of travel (F), parallel to a vertical longitudinal centre-plane of the harvester, and the openings (40) form lateral through-passages.

3. Harvester according to claim 2, **characterised in that** the clearing-off members (36, 37) take the form of flat bodies standing on edge which, in their rear regions, are connected to the mountings (34) by support means (35) arranged perpendicularly to the rear regions.

4. Harvester according to claim 3, **characterised in that** the mounting (34) of the wipers (33) is pivotable and spring-loaded.

5. Harvester according to one of claims 1 to 4, **characterised in that** there is arranged behind at least one of the clearing-off elements (36) a second clearing-off element (41) which substantially follows the change in direction which is made by the link chains in the region where they change direction.

## Revendications

1. Appareil à récolter (1) pour récolter du maïs ou un produit à récolter à tige similaire (3), dans lequel l'appareil à récolter (1) comprend au moins un convoyeur sans fin tournant (4 ; 5) pour la récolte ramassée (3) qui réalise à l'extrémité une zone d'amenée (30) de la récolte (3) à une ouverture d'entrée (6) d'un dispositif de transformation, en particulier d'une hacheuse, dans lequel le convoyeur sans fin (4 ; 5) présente au moins un plan de coupe (S) inférieur, comprenant des moyens de coupe (16) tournés vers l'extérieur, et au moins un plan de retenue (H1 ; H2) situé au-dessus de celui-ci et comprenant des moyens de retenue (17 ; 18) tournés vers l'extérieur, pour les brins de paille de la récolte, et dans lequel le ou les convoyeurs sans fin (4 ; 5) sont réalisés comme une ou plusieurs chaînes à maillons ou subissent un renvoi dans la zone d'amenée (30), **caractérisé par** au moins une tringle de débourrage (33) attribuée à la zone d'amenée (30) de l'ouverture d'entrée (6) et en cours de fonctionnement retenue de façon stationnaire par rapport à celle-ci, tringle qui pénètre avec sa partie détournée du dispositif de retenue respectivement dans la zone de renvoi de la ou des chaînes à maillons (4 ; 5) et y comprend un élément d'évacuation (36 ; 37) pour éjecter la récolte et pour nettoyer la ou les chaînes à maillons (4 ; 5), dans lequel au moins une ouverture (40) est prévue entre l'élément d'évacuation (36 ; 37) et le dispositif de retenue stationnaire (34).

2. Appareil à récolter selon la revendication 1, **caractérisé en ce que** les tringles de débourrage (33) s'étendent depuis leur dispositif de retenue (34) dans le sens de la marche (F) substantiellement en parallèle à un plan central longitudinal vertical du véhicule et **en ce que** les ouvertures (40) forment des passages latéraux.

3. Appareil à récolter selon la revendication 2, **caractérisé en ce que** les éléments d'évacuation (36 ; 37) sont réalisés comme des corps plats redressés sur chant qui sont reliés dans leur partie arrière aux dispositifs de retenue (34) par l'intermédiaire de moyens de support (35) disposés de façon perpendiculaire à la partie arrière.

4. Appareil à récolter selon la revendication 3, **caractérisé en ce que** le logement (34) des tringles de débourrage (33) est pivotant et chargé par ressort.

5. Appareil à récolter selon l'une quelconque des revendications 1 à 4, **caractérisé en ce qu'**au moins derrière l'un des éléments d'évacuation (36), un deuxième élément d'évacuation (41) est disposé qui suit substantiellement le renvoi décrit par les éléments à maillons dans la zone de renvoi.
